# EUROPEAN PATENT SPECIFICATION

(11) **EP 3 078 891 B1**
(45) Date of publication and mention of the grant of the patent: **03.04.2019**
(21) Application number: 16164412.5
(22) Date of filing: 08.04.2016
(51) Int. Cl.: F16L 5/10

(54) **CONNECTION UNIT OF A HEATING AND/OR DOMESTIC WATER SYSTEM**
VERBINDUNGSEINHEIT EINES HEIZ- UND/ODER HAUSWASSERSYSTEMS
UNITÉ DE CONNEXION D'UN DISPOSITIF DE CHAUFFAGE ET/OU SYSTÈME D'EAU DOMESTIQUE

(30) Priority: 08.04.2015 FI 20155252
(43) Date of publication of application: 12.10.2016
(73) Proprietor: Jakotec Oy, 44150 Äänekoski (FI)
(72) Inventor: SALMELA, Sami, 44150 ÄÄNEKOSKI (FI)
(74) Representative: Helke, Kimmo Kalervo

(56) References cited:
- DE-A1- 10 331 743
- DE-C1- 4 006 760
- DE-U1-202010 014 721
- US-A- 3 580 988
- US-A- 4 822 079
- US-A- 5 882 014
- US-A1- 2007 023 084
- US-A1- 2015 040 345
- US-B1- 6 199 580
- US-B1- 8 001 737

## Description

The invention relates to a connection unit for a heating and/or domestic-water system, which includes a box structure, in which are arranged
- standardized locations for main pipes,
- branch pieces for pipe lines to be led to points of use,
- adapter components arranged between the main pipes and the branch pieces,
- at least one wall structure, in which there are feed-through openings for main pipes and pipe lines equipped with sheathing pipes, to which feed-through openings feed-through seals of an elastic material are fitted, which are arranged to enclose the end of the sheathing pipe, and which feed-through seal includes
   - a cone part arranged to seal the feed through of the main pipe or pipe line through the feed-through seal,
   - a sleeve part, by which the feed-through seal is arranged to attach to the wall structure.

The prior art is known from US2007/0023084 A1 or from the Finnish patent publication FI 91791. This discloses a method for installing domestic-water and/or heating piping in a building. The method is based on manufacturing a connection unit as a box-structure pre-fabrication, which is brought as a finished structure for installation on the building site in question.

The aforementioned box structure includes a number of feed-through openings. Through them, for example, main pipes and distribution pipes are brought to the box structure. There can be an excess of openings in the casings structure. The unused openings are then plugged. Feed-through seals are installed in the openings that are used. The inner pipe of the main and distribution pipes, more generally the pipe, can be taken inside the box structure in order to connect them to the components arranged in the connection unit. Correspondingly, the end of the sheathing pipe around the inner pipe is pushed into the sleeve part of the feed-through seal from outside the box structure.

The use of the feed-through seal seeks to ensure the tightness of the box structure at the locations of the feed-through openings. In addition, the use of the feed-through seal also seeks to ensure that a leak taking place inside the box structure, or one that has entered the box structure along some of the sheathing pipe through the feed-through seal does not enter the sheathing pipe. On the other hand, a possible leak should be allowed to enter the connection unit along the sheathing pipe, so that it can be detected. Thus, in the case of the feed-through seal, it is also possible to speak of a check-valve property.

Feed-through seals known from the prior art, see e.g. US2015/0040345 and made of an elastic material cannot in all circumstances ensure the tightness of the feed-through opening and the aforementioned check-valve property. One example of this is a situation in which the inner pipe taken to the connection unit through a feed-through seal is bended. Its tightness is then not always fully ensured; instead a leak can continue to travel through the feed-through seal and out of the connection unit.

In addition to the above problems, there is also a problem related to the manufacture of the connection unit and also to its start-up on a building site in that the inner pipes and also, owing to that their sheathing pipes are of different sizes. As a result, the sizes of the feed-through openings vary according to the sizes of the pipes. In addition, for each pipe size there must also be a suitable feed-through seal adapted to the opening defined by the pipe size in question. Further, in building projects the pipe size to be used typically becomes apparent only at a relatively late stage, when the project is quite advanced.

The aforementioned causes a drawback in the logistics of the connection unit, because the arranging of suitably-sized feed-through openings in an otherwise already finished connection unit must be delayed, until the size of the feed-through opening to be used is settled. For its part, this delays the building project, because on the building site the finishing of the connection unit must wait when forming suitably-sized feed-through openings, and also when delivering the connection unit to the building site. In addition, there is also room for improvement in the fire-protection properties of connection units equipped with feed-through openings, more generally of wall structures.

The present invention is intended to create a connection unit for a heating and/or domestic-water system, in which the tightness properties of the feed-throughs are improved. The characteristic features of the connection unit according to the invention are stated in Claim 1.

In the invention, when the pipe is installed in the feed-through seal to the cone part of the feed-through seal is arranged to form a sealing length and the sleeve part of the feed-through seal includes seals at a distance from each other in order to seal the feed-through seal to the wall structure. By means of the invention, a more reliable check-valve property is achieved for the cone part and an improved adaptability to even thick wall structures is achieved for the sleeve part.

According to one embodiment, the cone part can have stretchability so that it settles and presses tightly against the pipe fed through it. According to one embodiment, the material thickness of the cone part can be, for example 15 - 35%, more particularly 15 - 30%, and even more particularly 15
- 25% of the material thickness of the sleeve part. For its part, this also improves the tightness of the feed-through seal. In addition, it also allows the pipe fed through the feed-through seal to have considerable flexibility already immediately after the feed-through seal, without, however, impairing the sealing properties and the check-valve property.

According to one embodiment, the slope of the cone part can be 5 - 20°, more particularly 5 - 15°, and even more particularly 5 - 10°. For its part, this also helps to form a sealing length around the inner pipe.

According to one embodiment, the feed-through seal can be fit sheathing pipes of two or more diameters. One feed-through opening and feed-through seal is then suitable for use with different pipe sizes. By means of such a feed-through seal, the wall structure can be equipped in its manufacturing stage with one-size standard feed-through openings. By means of the feed-through seal, the final fitting of the feed-through openings to the selected pipe sizes can take place on the building site. If the feed-through seal is applied, for example, in connection with connection units, the connection units can be delivered to the building site immediately after fitting out and forming the feed-through openings and possible installing the feed-through seals, and on the building site fit to them the pipes of the chosen size. In this way, significant savings in time are made. The finishing of the connection units does not require waiting for the pipe sizes to be confirmed; instead they can be delivered already at an early stage to the building site to await installation and pipes of the chosen size.

According to one embodiment, the seals can include two sealing lips on their sides. The first, outermost sealing lip is arranged to form shoulders fitted to the sleeve part. At least one of the shoulders, when the feed-through seal is installed, is arranged to lie against the wall structure. The other sealing lip is arranged to form to into a recess for the wall structure, fitted to the sleeve part between the shoulders. In addition, the sleeve part can also include a groove between the shoulder and the second sealing lip. By means of the two sealing lips, the feed-through seal fits tightly and firmly even to thick wall structures.

According to yet another embodiment, the internal space arranged in the feed-through seal for a sheathing pipe of smaller diameter can be dimensioned in such a way that, when the sheathing pipe is pushed into the feed-through seal, it is arranged to press the shoulder of the feed-through seal against the edge of the feed-through opening, to create addition tightness. This too further improves the tightness properties of the feed-through seal.

Some possible applications of the invention are the aforementioned heating and/or domestic water system connection units. Similarly, the solution according to the invention can also be applied simply in wall structures, for example, between apartments. Yet another application of the invention in general is a wall structure, which is equipped with a fire break. In a wall structure equipped with a fire break, the feed-through seal according to the invention can be applied, as can other kinds of feed-through seals previously known from the prior art. Other additional advantages achieved by the invention appear in the description portion and their characteristic features are stated in the accompanying Claims.

The invention, which is not restricted to the embodiments described in the following, is described in greater detail with reference to the accompanying figures, in which
- Figure 1: shows an example of a connection unit, with the cover opened, and connected to the main and distribution pipes of one example of a heating and domestic-water system,
- Figure 2: shows schematically in partial cross-section a first example of the use of the feed-through seal in a wall structure and applied to a smaller pipe,
- Figure 3: schematically in partial cross-section a second example of the use of the feed-through seal in a wall structure and applied to a larger pipe size,
- Figure 4: shows a side view of the feed-through seal,
- Figure 5: shows an angled end view of the feed-through seal of Figure 4,
- Figure 6: shows an end view of an example of the feed-through seal,
- Figure 7: shows a cross-section of the feed-through seal shown in Figure 6 installed in a feed-through opening,
- Figure 8: shows a cross-section at the sleeve part of the feed-through seal shown in Figure 7,
- Figure 9: shows an angled side view of the feed-through seal of Figure 4,
- Figure 10: shows generally an example of the feed-through seal in connection with one wall structure, seen at an angle from one side, and
- Figure 11: shows generally in cross-section an example of the feed-through seal and its use in a wall structure, applied to a larger pipe size.

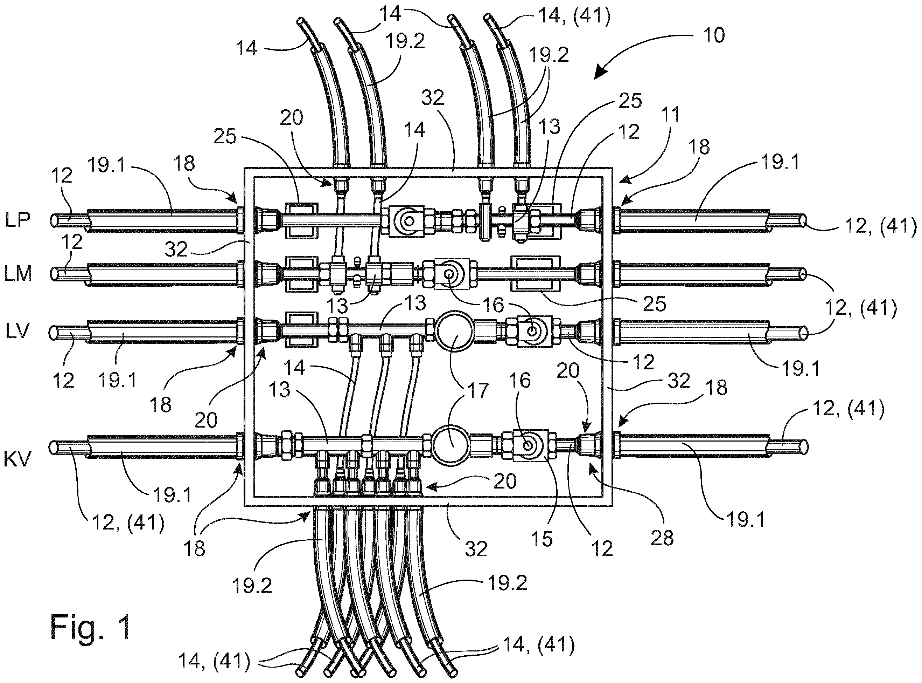

Figure 1 shows an example of one standardized connection unit 10, with the cover opened and connected to the main pipes 12 and distribution pipes 14 of one example of a heating and domestic-water system, more generally, to pipes 41. Here, the connection unit 10 is shown as only one example of an application for the invention. Figure 1 shows the complete piping for the unit 10. At the same time the connection unit 10 also acts as a distribution unit. In it, the main heating pipe 12 include the supply and return lines LP, LM in the upper part of the box structure 11, and the lower main cold domestic-water KV, with above it the corresponding pipe line for hot domestic water LV, as the pipe lines 14. Such a connection unit 10 can be used, for example, in places in which there are at least two connection units 10 connected in series in the HP system (heating, plumbing), for example, in apartment blocks and terraced houses.

The connection unit 10, according to the example, for a heating and/or domestic-water system is fitted into a box structure 11. The box structure 11 can be known from the prior art, for example, as a square box closed on all sides, which is flat relative to its height and width. It can be manufactured, for example, from thin sheet metal or a fibre-reinforced material. The box structure 11 can be equipped with an openable cover, which is removed in Figure 1. Through the openable cover, the box structure 11 can be equipped, during manufacture, with the necessary components 13, 15 - 17, 25, while in addition, the main pipes 12 and distribution pipes 14 shown in Figure 1 can now be connected at the building site to components 13, 25. Thus, the connection unit 10 can be a prefabricated encased unit, which contains all the connection components firmly secured to the box structure 11. A fixed point is then immediately obtained for the pipes 41 to be connected and a distribution manifold need not be constructed for them.

In an as such known manner, standardized places 25 can be arranged in the box structure 11 for the main pipes 12. The standardization of the places 25 means, for example, that the main pipes 12 fitted to them can mainly be directly connected to the components fitted to the box structure 11 permanently in connection with the prefabrication, without requiring substantial alterations in the box structure 11 or components 13. This substantially accelerates the installation of the connection unit 10 on the building site.

Further, branch pieces 13 are also fitted to the box structure 11 for the distribution pipes 14 leading to points of use. The points of use can include, for example, the heating system and water points of use in the building. The distribution pipes 14 can be supply or return lines. Return lines can be needed, for example, in connection with the heating system. The distribution pipes 14 are typically pressure-water pipes.

Between the main pipes 12 and the branch pieces 13, adapter components 15 - 17, by which they are connected to each other, are additionally arranged in the box structure 11, for example, in an as such known manner. The adapter components can include, for example, a T-piece 15, a shut-off valve 16, a water meter 17, and a distribution manifold acting as a branch piece 13. The hot-domestic-water LV and cold-domestic-water KV main pipes 12 are connected to T-pieces 15, which are attached to the bottom on the box structure 11 with the aid of an attachment. The attachment secures the T-piece 15 firmly to the box structure 11, when it further secures the shut-off valve 16 equipped with an angle piece 16, the water meter 17, and the branch pieces 13. The main water line continues on the other side of the T-piece 15 with a similar main pipe 12 and still using a sheathing pipe 19.1, also when continuing the line. In the case of the main pipes 12 arranged for heating, the adapter components include a T-piece, a shut-off valve, and a branch piece 13, by which the main pipes 12 are connected to the distribution pipes 14. The branch pieces 13 are on a different level to the main pipes 12. The main pipes 12 can then be led straight through the box structure 11.

Further, feed-through openings 18, for example, with standardized positions, are arranged in the box structure 11 for the main pipes 12 and distribution pipes 14, which are equipped with sheathing pipes 19.1, 19.2. The feed-through openings 18 are arranged in at least one wall structure 32. In the case according to the embodiment, the wall structure 32 can define the box structure 11 or it can also be a partition inside it. A feed-through seal 20, enclosing the end 31 of the sheathing pipe 19.1, 19.2 is fitted to the feed-through openings 18. The main pipes 12 and distribution pipes 14, more generally the pipes 41, travelling outside the box structure 11 inside a sheathing pipe 19.1, 19.2 through the feed-through seal 20, are brought into the box structure 11 through the wall structure 32. All the feed-through openings 18 of the box structure 11 can be equipped with a feed-through seal 20, though a main pipe 12 or distribution pipe 14 is only brought through some of them. The main pipes 12 and distribution pipes 14 can remain in their sheathing pipes 19.1, 19.2 inside the casting. It is then possible to change the pipes 41 afterwards.

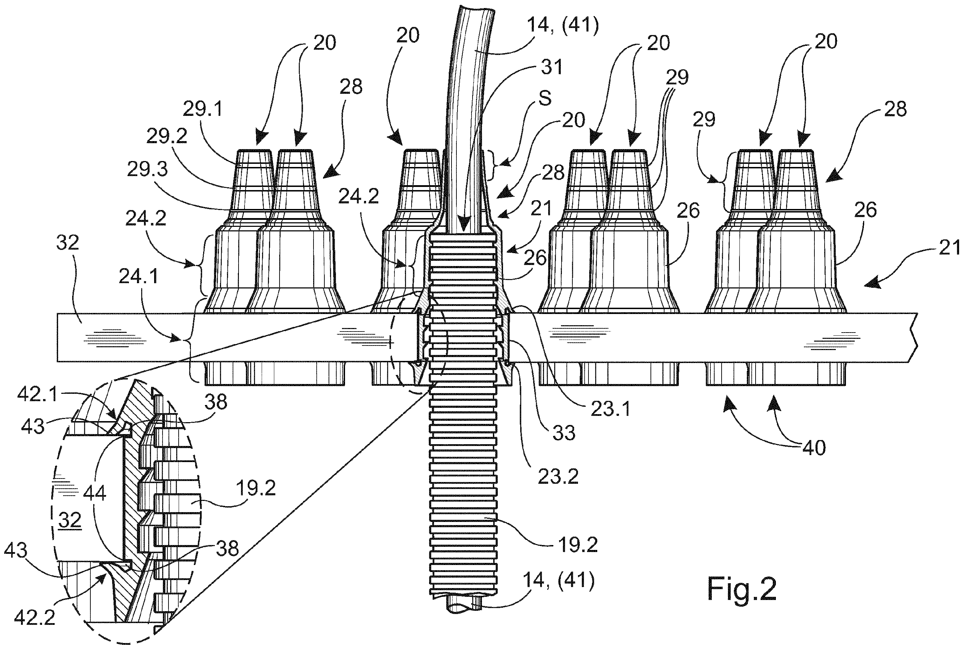

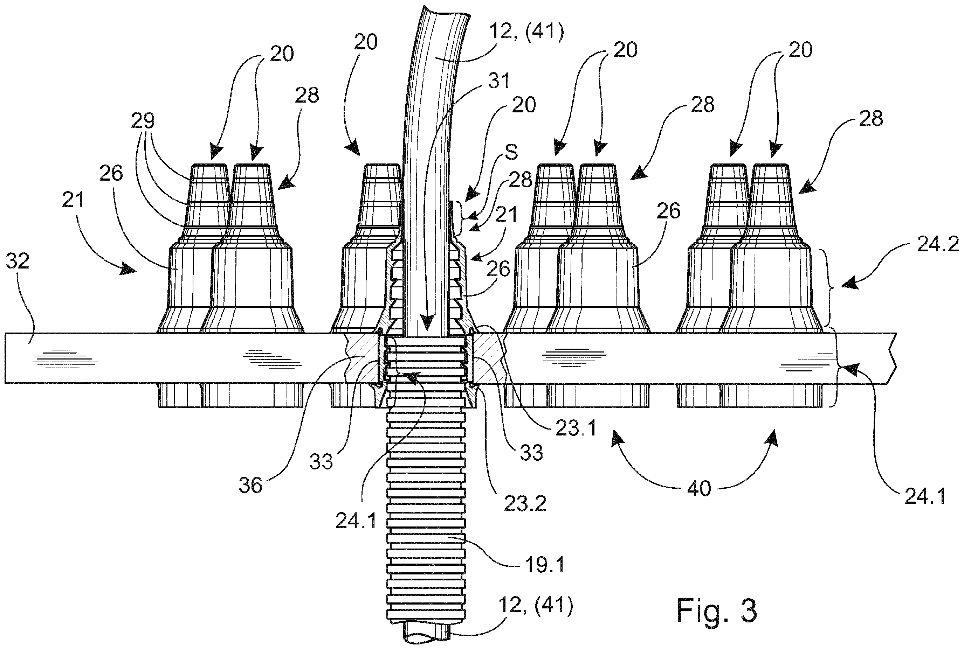

In the connection unit 10, at least one feed-through opening 18 is equipped with a feed-through seal 20, which is adapted for a sheathing pipe 19.1, 19.2 of two or more different diameters. This accelerates and simplifies the manufacture of the connection unit 10 and particularly its delivery to the building site and installation there. Figures 2 and 3 show one example of a feed-through seal 20, in which this principle is realized.

Figure 2 shows schematically in partial cross-section a first example of the use of the feed-through seal 20 in a connection unit 10, as applied to a smaller pipe size and Figure 3 correspondingly but applied to a larger pipe size. In the example according to the embodiment, the feed-through seal 20 includes an axially consecutive sleeve part 21 and cone part 28. The cone part 28 is arranged to seal the feed-through of the pipe 41 through feed-through seal 20. The feed-through seal 20 is arranged to be attached by the sleeve part 21 to a feed-through opening 18 formed in the wall structure 32.

The sleeve part 21, more generally the feed-through seal 20, is divided into two axially consecutive internal spaces 24.1, 24.2 for sheathing pipes 19.1, 19.2 with diameters of different sizes. In Figures 2 and 3, the areas corresponding to the internal spaces 24.1, 24.2 are marked with reference numbers from the outside of the sleeve part 21. The outer internal space 24.1, arranged in the sleeve part 21 closer to the opening 40 arranged in the feed-through seal 20, is arranged for a sheathing pipe 19.1 with a larger diameter. Correspondingly, the inner internal space 24.2 arranged in the sleeve part 21 is arranged for a sheathing pipe 19.2 with a smaller diameter.

Adaptation can be obtained by dimensioning the internal diameter of the internal spaces 24.1, 24.2 suitably, taking into account the external diameter of the sheathing pipe 19.1, 19.2. The feed-through seal 20, manufactured from, for example rubber or another flexible, more generally elastic material, will then receive the sheathing pipe 19.1, 19.2 tightly and the inner circumference of the inner space 24.1, 24.2 will press tightly on the outer surface of the sheathing pipe 19.1, 19.2, creating a tight fit between them, which also holds the sheathing pipe 19.1, 19.2 in place. This is aided by grips, of which claw-ring formations 30 are shown as an example, arranged in the inner spaces 24.1, 24.2 of the feed-through seal 20.

It can further be seen from Figures 2 and 3 and especially 7, that at least part 26 of the sleeve part 21 can be arranged to extend inside the box structure 11, more generally through a feed-through opening 18 arranged in the wall structure 32. In this way, the operating reliability of the feed-through seal 20 is improved in possible cases of a leak occurring inside the box structure 11. Due to the extended collar, the end of the cone part 28 of the feed-through seal 20 is farther from the bottom of the box structure 11, in which liquid collects from a possible leak before being led out of the box structure 11 through a feed-through (not shown) arranged for it, for example to show the leak.

The part 26 of the sleeve part 21 that extends inside the box structure 11, more generally, through the feed-through opening 18, is arranged to correspond mainly to the inner space 24.2 arranged for a sheathing pipe 19.2 with a smaller diameter. The part of the sleeve part 21 corresponding to the inner space 24.1 arranged for a larger sheathing pipe 19.1 corresponds in its outer dimensions to the diameter of the feed-through opening 18 in such way, that it fits tightly into it and also seals that in the manner described in greater detail hereinafter.

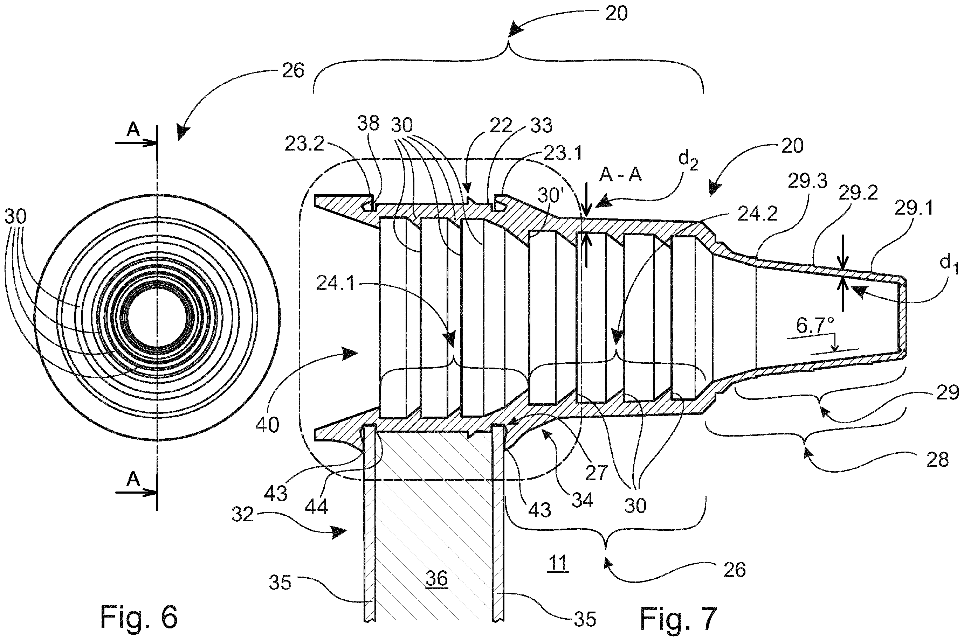

According to one embodiment, the inner space 24.2 of the sleeve part 21 arranged for a sheathing pipe 19.2 with a smaller diameter can be dimensioned in such a way that, when the sheathing pipe 19.2 is pushed into the sleeve part 21, it is arranged to press the shoulder 23.1 of the sleeve part 21 against the edge 27 (Figure 7) of the feed-through opening 18, in order to create an additional seal. Thus, even though the sheathing pipe 19.2 with a smaller diameter does not fill the outer and larger inner space 24.1, nevertheless even with a smaller sheathing pipe 19.2 a good seal of the feed-through opening 18 is still achieved, even though the expansion effect of the sheathing pipe 19.2 in the larger inner space 24.1 is lacking.

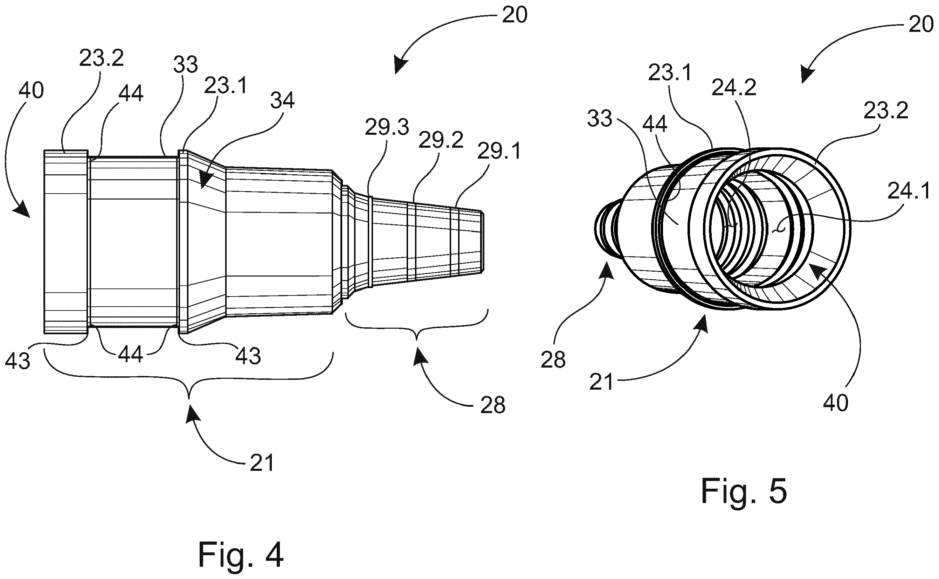

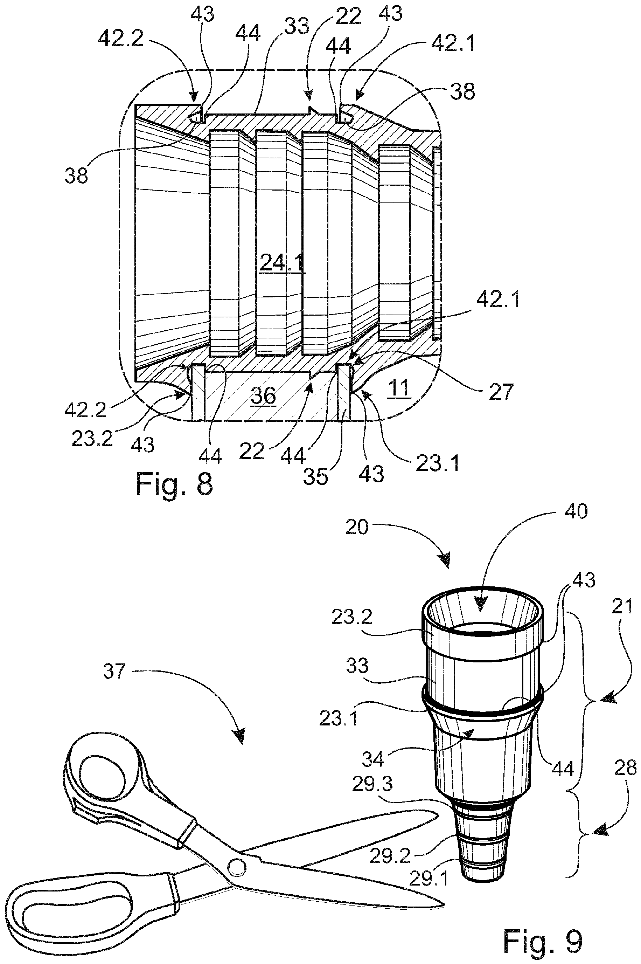

Figures 4, 5, and 9 show one example of a detached feed-through seal 20, seen from different directions. Figure 4 shows a side view of the feed-through seal 20, Figure 5 an angled end view, and Figure 9 an angled side view. The feed-through seal 20 also includes a cone part 28 for the feed-through of a main pipe 12 or pipe line 14. The cone part 28 can be fitted inside the box structure 11, or even more generally on that side of the wall structure 32 that is the opposite side to the location of the sheathing pipe 19.1, 19.2.

A cutting guide 29 for main pipes 12 or pipe lines 14 of different diameters can be arranged in the cone part 28. The guide can be formed of cutting marks 29.1 - 29.3 arranged in the cone part 28, and a pipe-size marking arranged in connection with it. Thus, the feed-through seal 20, and with it the entire connection unit 10 can be easily prepared for use at the installation site. All that is needed is that part of the cone part 28 is cut off at the guided point, for example, using scissors 37, before the installation of the inner pipe of the main pipe 12 or pipe line 14. After cutting, an opening is formed in the cone part 28, the edges of which lie, when the pipe 41 is fed through, tightly against the outer surface of the pipe 41 over a relatively large part of its length S. For example, the size of the pipes 41 can be a diameter of 10 - 20 mm and correspondingly the size of the sheathing pipes 19.1, 19.2 diameters of 20 - 30 mm. It will be obvious to one versed in the art that the dimensions of the feed-through seals 20 can differ for different pipe-size combinations. However, one feed-through seal 20 will fit a sheathing pipe 19.1, 19.2 of at least two different sizes.

Figure 6 shows an end view of an example of the feed-through seal 20 and Figure 7 shows a cross-section of a corresponding feed-through seal 20 installed in a feed-through opening 18. In addition, Figure 8 shows further a cross-section of the sleeve part 21 shown in Figure 7 in greater detail. The sleeve part 21 includes seals 42.1, 42.2 at a distance from each other for sealing the feed-through seal 20 to the wall structure 32. Thanks to the seals 42.1, 42.2, the feed-through seal 20 is attached tightly to the wall structure 32.

According to one embodiment, the seals 42.1, 42.2 include two sealing lips 43, 44 on each side. The first, outer, sealing lip 43 is arranged to form shoulders 23.1, 23.2 fitted to the outer circumference of the sleeve part 21. When the feed-through seal 20 is installed in the wall structure 32, at least one shoulder 23.1, 23.2 of the shoulders 23.1, 23.2 is arranged to lie against the wall structure 32. The shoulder 23.1, 23.2 is then against the outer surface of the wall structure 32, as can be clearly seen from, for example, Figures 2, 3, 7, 8, and 11.

When the feed-through seal 20 is installed in the feed-through opening 18, the shoulders 23.1, 23.2 can arranged to settle of both sides of the feed-through opening 18. This in turn ensures the correct and also tight installation of the elongated feed-through seal 20 in the feed-through opening 18 and also that it remains in place when the main pipe 12 and pipe lines 14 are installed. The main pipe 12 and pipe lines 14 may have to be pulled and pushed through the feed-through seal 20 when being installed, in which case the shoulders 23.1, 23.2 will also hold it firmly in place.

The seals 42, 43 can also include a second sealing lip 44. Between the shoulders 23.1, 23.2 there can be a recess 33 in the feed-through seal 20 of the thickness of the wall structure 32 of the box structure 11. The second sealing lip 44 is then fitted into the recess 33 arranged in the sleeve part 21 between the shoulders 23.1, 23.2, which is in the sleeve part 21 for the wall structure 32. When the feed-through seal 20 is installed in the wall structure 32, the sealing lip 44 fitted in the recess 33 then lies against the internal circumference of the feed-through opening 18.

The sleeve part 21 can also include a groove 38 between the shoulder 23.1, 23.2 and the second sealing lip 44. There can be cuts in the circumferential direction on both edges of the recess 33 arranged in the feed-through seal 20, right next to the shoulders 23.1, 23.2. They form a groove 38 in the recess 33 of the sleeve part 21. Once the feed-through seal 20 has been installed in the feed-through opening 18, the plates 35 on the outer surfaces of the wall structure 32 of the box structure 11 settle into the grooves 38 formed by these cuts, as can be clearly seen in Figures 7 and 8. A labyrinth seal is then formed at both ends of the feed-through opening 18, in addition to the lip seal, also ensuring its tightness.

The groove 38 can extend from the area of the recess 33 to also slightly under the shoulders 23.1, 23.2, when the feed-through seal 20 is detached from the wall structure 32. This can be seen particularly clearly, for example, in Figure 7. The cut extending under the shoulder 23.1, 23.2 then improves the formation of the first sealing lip 43 and its settling against the outer surface of the wall structure 32, which can also be seen clearly, for example, in Figure 7. When installing the feed-through seal 20 in the feed-through opening 18 arranged in the wall structure 32, the sealing lips 43 formed by the shoulders 23.1, 23.2 appear to open in the longitudinal direction of the feed-through seal 20 due to the cut extending under them and thus the sealing lips 43 settle to press on the outer surface of the wall structure 32, thus improving the sealing. At the same time, it is also ensured that the feed-through seal 20 will remain in place in the feed-through opening 18, thanks to the opening of the sealing lip 43.

In the recess 33 arranged in the sleeve part 21 there can be one or more various, for example, annular seal shaping, or even corresponding shoulders 23.1, 23.2, as described being in the ends of the recess 33 (reference number 22 in Figures 7 and 8) . The seal shapings 22 can be on the bottom of the recess 33 between the shoulders 23.1, 23.2 located at the ends of the recess 33. The location of the seal shapings 22 can be arranged, for example, according to the thicknesses of the wall structures 32 of the connection units 10. The seal shaping 22 can then settle in the end of the feed-through opening 18 in a manner corresponding to that taking place in the shoulders 23.1, 23.2.

One example of the seal shapings is one or more consecutive circumferential sealing strips 22 in the axial direction of the feed-through seal 20. In addition to the strips 22 formed, for example, from the protrusions arranged on the bottom of the recess 33, in connection with them there can also be a corresponding circumferential cut. This forms a corresponding groove 38 to that described in connection with the shoulders 23.1, 23.2 in the ends. According to one embodiment, the additional shoulder together with the cut groove can be formed on the bottom of the recess 33 by a cut made in the sleeve part 21, in which, at the same time, an additional shoulder is also formed (for example, in connection with moulding). By means of the additional seal shapings 22, the same feed-through seal 20 can be arranged in the wall structures 32 of connection units 10 with different wall thicknesses.

The cone part 28 of the feed-through seal 20 is formed in such a way that, with the pipe 41 installed in the feed-through seal 20, to the cone part 28 is arranged to form a sealing length S. The sealing length S forms more than, for example, the material thickness d1 of the cone part 28. In the case according to the embodiment, in which the cone part 28 and in this case now also the entire feed-through seal 20 is of an elastic material, the cone part 28 stretches slightly at least in the thickness direction of the pipe 41. Thus the fitting of the pipe 41 to the cone part 28 becomes extremely tight. As a result, the inner surface of the cone part 28 presses against the outer surface of the pipe 41 over a greater length S and thus also over a greater surface area than, according to the prior art, from only the end opening of the cone part 28. The sealing length S can be, for example, more than 2 mm.

By means of the sealing length S, an improved check-valve property is gained for the feed-through seal 20, compared to the prior art. A leak occurring in the pipe 41 outside the connection unit 10 can then enter the connection unit 10 through the feed-through seal 20 inside the sheathing pipe 19.1, 19.2. From there it can create an indication in a chosen manner (for example, a leak trough outside the connection unit 10). On the other hand, thanks to the sealing length S, for example, a leak taking place inside the connection unit 10 and/or a leak that has come to the inside the connection unit 10 after travelling along the sheathing pipe 19.1, 19.2 and through the feed-through seal 20, does not pass through the feed-through seal 20 due to the cone part 28 with the sealing length S, and thus can still continue to travel outside the connection unit 10. Thus, thanks to the cone part 28 comprising the sealing length S the feed-through valve 20 gains an improved check-valve functionality that is more reliable than that of the prior art.

The sealing length S in the cone part 28 of the feed-through valve 20 particularly permits there to be a deflection in the pipe 41 taken through the feed-through seal 20, when it is taken into the connection unit 10 through the feed-through seal 20. Deflections are quite usual, when pipes 41 are taken to connection elements inside the connection unit 10. This can be clearly seen in Figure 1, for example, in the pipe line 14 at the lower edge of the connection unit 10. Thanks to the sealing length S of the cone part 28 the check-valve property of the feed-through seal 20 is also then well preserved.

According to one embodiment, for example, the material thickness d1 of the cone part 28 to be fitted inside the box structure 11 can be, for example, 15 - 35%, more particularly 15 - 30%, and even more particularly 15 - 25% of the material thickness d2 of the sleeve part 21. An example of the material thicknesses d1, d2 can be d1 = 0.3 - 0.4 mm and d2 = 1.4 - 1.6 mm. This feature too improves the sealing properties of the feed-through seal 20 by permitting the pipe line 14 to bend even greatly inside the box structure 11, for example, when taking it to a branch piece 13. The tightness of the feed-through seal 20 is still well preserved, because the bending has practically no effect on the sleeve part 21, in which the feed-through seal 20 corresponds to the feed-through opening 18. In addition, the slope of the cone part 28 can be 5 - 20°, more particularly 5 - 15°, even more particularly 5 - 10° (in the embodiment, 6,7°) . Here, the slope refers to the angle between the cone part 28 of the feed-through seal 20 in the horizontal direction and the horizontal plane. These features too (ratio of the material thicknesses d1 and d2 and/or the slope of the cone part 28) for their part improve the forming of the sealing length S to the cone part 28 and thus more generally to the feed-through seal 20.

The inner spaces 24.1, 24.2 of the feed-through seal 20 can be equipped with grips arranged on its internal circumference. As an example of these, claw-ring formations 30 are shown, which can be clearly seen in Figures 5, 6 and 7. They ensure that the sheathing pipe 19.1, 19.2 remains inside the feed-through seal 20. Correspondingly, the sheathing pipe 19.1, 19.2 can be grooved on its outer surface. The distance between the claw-ring formations 30 can then be dimensioned, for example, according to the grooving of the sheathing pipe 19.1, 19.2. In addition, in the outer surface of the feed-through seal 20, there can be a gently angled surface 34 in connection with the shoulder 23.1 in the sleeve part 21. This facilitates the installation of the feed-through seal 20 in a feed-through opening 18.

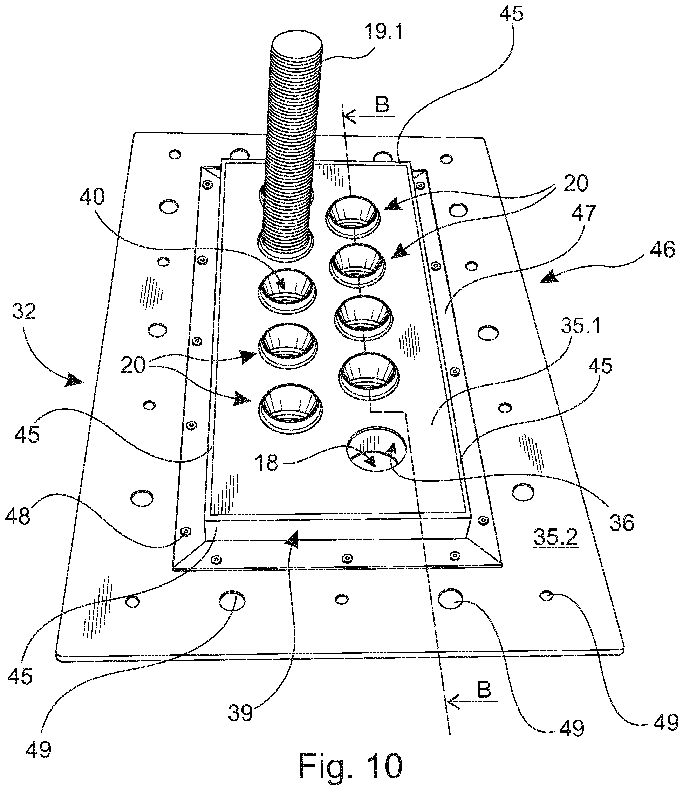

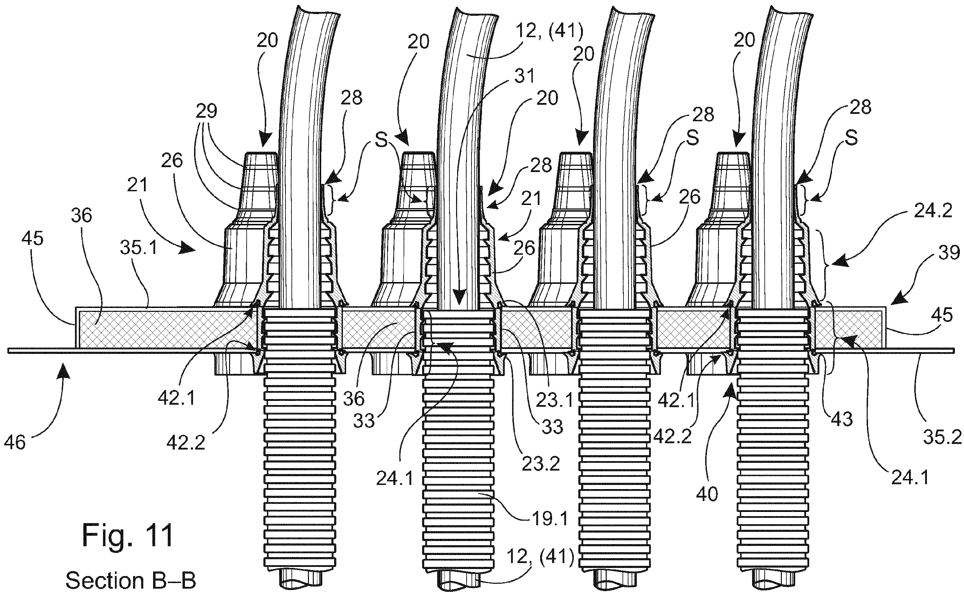

Figures 10 and 11 show generally examples of the feed-through seal 20 and its use in general in connection with a wall structure 32. Figure 10 shows the wall structure 32 at an angle from one side and Figure 11 the same in cross-section and applied to a larger pipe size. Above, in Figures 1 - 9 the feed-through seal 20 is described as an example of an application in connection with a connection unit 10. It should be noted, however, that the feed-through seal 20 can be generally applied in other applications too than only in connection units 10. Thus the invention relates, in addition, to a feed-through seal 20 itself for feeding a pipe 41 through a wall structure 32.

One or more feed-through openings 18 are arranged in the wall structure 32 for a pipe 41 equipped with a sheathing pipe 19.1, 19.2 (Figures 2 and 3). A feed-through seal 20 of an elastic material enclosing within it the end 31 of the sheathing pipe 19.1, 19.2 can be fitted into each feed-through opening 18. The feed-through seal 20 includes a cone part 28 arranged to seal the feed-through of a main pipe 12 or pipe line 14 through the feed-through seal 20, and a sleeve part 21, from which the feed-through seal 20 is arranged to be attached to the wall structure 32.

When a main pipe 12 or distribution pipe 14 is installed in the feed-through seal 20, a sealing length S is arranged to be formed in the cone part 28. In addition, the sleeve part 21 includes seals 42.1, 42.2 at a distance from each other for sealing the feed-through seal 20 to the wall structure 32.

According to one embodiment, the feed-through seal 20 is also arranged for a sheathing pipe 19.1, 19.2 of two or more different diameters. According to one embodiment, the pipes 41 can be the main pipes 12 and/or pipe lines 14 already referred to in the above examples. It should be noted however, that such a feed-through seal 20 can also be used in other kinds of connection units 10 or even applications (generally in wall structures 32) than only those described above by way of example.

Above, the feed-through seal 20 is described only in connection with such connection units 10, in which the wall structure 32 lies in both grooves 38 formed by cuts in the sleeve part 21. However, the feed-through seal 20 according to the invention is equally also suitable for wall structures, in which there is not, for example, a fire-protection mass. The feed-through opening can then be simply, for example, is a wall structure that is simply of a thin sheet. In that case, the feed-through seal 20 can be attached to the wall structure by only one of the cuts in the sleeve part, which is closer to the opening 40 of the sleeve part. In this, the cut lies against the edge of the feed-through opening made in the thin sheet metal.

Figures 3, 7, 10, and 11 show one example of a structural solution relating to, for example, the connection unit 10, more generally the wall structure 32. It relates particularly to wall structures 32, which are equipped with feed-through openings 18. Such wall structures 32 can be, for example, precisely in connection units 10, or also, for example, in partitions between apartments. The wall structure 32 includes a fire-protection mass 36 for forming a fire break. A fire-protection mass is characterized by expanding under the influence of heat. At least some of the feed-through openings 18 are arranged in connection with the fire-protection mass 36. This improves the fire safety of the feed-through openings 18 and the wall structures 32.

In the case according to the embodiment shown, the wall structure 32 can be formed at least partly as a box structure 39, in connection with which at least some of the feed-through openings 18 arranged in the wall structure 32 are arranged. The box structure 39 can be formed, for example, of outer surfaces, shells 35.1, 35.2 of thin sheet metal or a similar material. Between the shells 35.1, 35.2, i.e. inside the box structure 39 there can be fire-protection mass 36. The fire-protection mass 36 forms a porous core to the box structure 39. The box structure 39 is thus a kind of sandwich structure. It includes a core formed of fire-protection mass 36 with shells 35.1, 35.2 of thin sheet metal on each side of the fire-protection mass 36.

Between the shells 35.1, 35.2 on the edges of the fire-protection mass 36 are the edges 45 of the box structure 39 (Figures 10 and 11). The material of the edges 45 can also be thin sheet metal. The edges 45 attach the shells 35.1, 35.2 to each other. Together with the shells 35.1, 35.2, the edges 45 confine the fire-protection mass 36 inside the box structure 39.

At least one of the shells 35.2 can, in addition, be part of a larger cut-off wall 46, on which the box structure 39 is formed. The box structure 32 is installed at its operating location by the cut-off wall 46. In Figure 10, the box structure 39 is on that side of the wall structure 32, from which the sheathing pipe 19.1 enters the feed-through seal 20. Correspondingly, in Figure 11, the box structure 39 is on the opposite side of the wall structure 32 relative to the sheathing pipe 19.1. In the case of the cut-off wall 46, there can, for example, be flanges 47 in the edges 45 of the box structure 39 on each side of the box structure 39. The totality formed from these edges 45 and the shell 35.1 can be attached to the cut-off wall 46 forming the other larger shell 35.2, for example, by rivets 48. In turn, there can be attachment points 49 in the cut-off wall 46 outside the box structure 39, from which it can be fitted as part of the actual wall, for example, as a partition between apartments (not shown).

The advantage of this structural solution is that, in the possible case of a fire, for example such feed-through openings 18, through which a main pipe 12 or distribution pipe 14, more generally a pipe 41, has not been installed, but only a feed-through seal 20, close when the feed-through seal 20 melts and the fire-protection mass 36 expands to fill the feed-through opening 18. This substantially improves the fire safety, for example, of buildings equipped with connection units 10. However, this structural solution implementing a fire break can equally be used elsewhere than only in connection units 10. One example of these is the partitions between apartments.

Further in addition, this wall-structure solution implementing a fire break can equally also be used with feed-through seals 20 other than those disclosed in the present application. Thus also traditional feed-through seals or those only under development are possible in the wall structure 32 without being limited in any way to the feed-through seal 20 disclosed in the present application. Thus, yet another object of the present application is also a wall structure 32, in which are arranged one or more feed-through openings 18 for one or more feed-through seals 20, and which wall structure 32 includes a fire-protection mass 36, in connection with which at least some of the feed-through openings 18 are arranged.

The core of a porous fire-protection mass 36 makes the wall structure 32 slightly liable to collapse or more generally to deformations. This problem can be solved by means of the feed-through seal 20 according to the invention. In particular, this can be achieved by means of the shoulders 23.1, 23.2 and the cutting grooves arranged next to them. Even a sheathing pipe 19.2 of a smaller size can then direct a sufficient sealing pressure on the shoulder 23.1, though the pressure created by the sheathing pipe 19.2 is not precisely at the shoulder 23.1. This is also helped by the tight fit of the sheathing pipe 19.2 to the inner space 24.2 arranged for that in the sleeve part 21 and particularly the claw-ring formation 30' (Figure 7) arranged near the shoulder 23.1, through which the sheathing pipe 19.2 presses the shoulder 23.1 and the groove 38 against the sheet 35 of the wall structure 32.

The material of the feed-through seal 20 can be, for example, plastic, EPDM/nitrile rubber, polyurethane, silicon, or some other elastic material, for example an elastic composite material. Reference can also be made to a thermoplastic elastomer. A wood composite can also come into question. The feed-through seal 20 can be manufactured, for example, by injection moulding, 3-D printing, or pour-moulding (PUR).

In should be understood, that the above description and the related figures are intended only to illustrate the present invention. The invention is thus not restricted to the embodiments described above or defined in the Claims, instead, many different variations and modifications of the invention, which are possible within the scope of the inventive idea defined in the accompanying Claims, will be obvious to one versed in the art.

## Claims

1. Connection unit for a heating and/or domestic-water system, which includes a box structure (11), in which are arranged
- standardized locations (25) for main pipes (12),
- branch pieces (13) for pipe lines (14) to be led to points of use,
- adapter components (15 - 17) arranged between the main pipes (12) and the branch pieces (13),
- at least one wall structure (32), in which there are feed-through openings (18) for main pipes (12) and pipe lines (14) equipped with sheathing pipes (19.1, 19.2), to which feed-through openings (18) feed-through seals (20) of an elastic material are fitted, which are arranged to enclose the end (31) of the sheathing pipe (19.1, 19.2), and which feed-through seal (20) includes
- a cone part (28) arranged to seal the feed through of the main pipe (12) or pipe line (14) through the feed-through seal (20),
- a sleeve part (21), by which the feed-through seal (20) is arranged to attach to the wall structure (32),
**characterized in that**
- when the main pipe (12) or pipe line (14) is installed in the feed-through seal (20), a sealing length (S) is arranged to be formed in the cone part (28),
- the sleeve part (21) of the feed-through seal (20) includes seals (42.1, 42.2) at a distance from each other for sealing the feed-through seal (20) to the wall structure (32),
- feed-through seal (20) is adapted for a sheathing pipe (19.1, 19.2) with two or more different diameters.

2. Connection unit according to Claim 1, **characterized in that** the material thickness (d1) of the cone part (28) is 15 - 35%, more particularly 15 - 30%, and even more particularly 15 - 25% of the material thickness (d2) of the sleeve part (21).

3. Connection unit according to Claim 1 or 2, **characterized in that** the slope of the cone part (28) is 5 - 20°, more particularly 5 - 15°, and even more particularly 5 - 10°.

4. Connection unit according to any of Claims 1 - 3, **characterized in that** the seals (42.1, 42.2) include two sealing lips (43, 44) each on its own side, of which
- the first outermost sealing lip (43) is arranged to form shoulders (23.1, 23.2) fitted to the sleeve part (21), of which at least one shoulder (23.1, 23.2) is arranged, when the feed-through seal (20) is installed, to settle against the wall structure (32),
- the second sealing lip (44) is arranged in the sleeve part (21) in a recess (33) arranged between the shoulders (23.1, 23.2) for the wall structure (32) .

5. Connection unit according to any of Claims 1 - 4, **characterized in that** the sleeve part (21) includes a groove (38) between the shoulders (23.1, 23.2) and the second sealing lip (44) .

6. Connection unit according to any of Claims 1 - 5, **characterized in that** the feed-through seal (20) is adapted for a sheathing pipe (19.1, 19.2) of two or more different diameters.

7. Connection unit according to Claim 6, **characterized in that** the feed-through seal (20) is divided into two axially consecutive internal spaces (24.1, 24.2) for sheathing pipes (19.1, 19.2) of different diameters.

8. Connection unit according to Claim 6 or 7, **characterized in that** the internal spaces (24.1, 24.2) for sheathing pipes (19.1, 19.2) of different diameters are arranged in the sleeve part (21), of which at least part (26) is arranged to extend through a feed-through opening (18) arranged in the wall structure (32).

9. Connection unit according to Claim 8, **characterized in that**
- the part (26) of the sleeve part (21) that extends through the said feed-through opening (18) is arranged to correspond mainly to the inner space (24.2) arranged for a sheathing pipe (19.2) with a smaller diameter,
- the inner space (24.2) arranged in the feed-through seal (20) for a sheathing pipe (19.2) with a smaller diameter is dimensioned in such a way that, when the sheathing pipe (19.2) is pushed into the feed-through seal (20) it is arranged to press the shoulder (23.1) of the feed-through seal (20) against the edge (27) of the feed-through opening (18) in order to create an additional seal.

10. Connection unit according to any of Claims 1 - 9, **characterized in that** the wall structure (32) includes a fire-protection mass (36), in connection with which at least some of the feed-through openings (18) are arranged.

11. Connection unit according to Claim 10, **characterized in that** the wall structure (32) includes a box structure (39), in connection with which at least some of the feed-through openings (18) are arranged and inside which box structure (39) the fire-protection mass (36) is arranged.

## Patentansprüche

1. Anschlusseinheit für ein Heizungs- und/oder Brauchwassersystem, das eine Gehäusekonstruktion (11) umfasst, in der angeordnet sind
- standardisierte Positionen (25) für Hauptleitungen (12),
- Abzweigstücke (13) für Leitungslinien (14), die zur Verwendungsstelle führen,
- zwischen den Hauptleitungen (12) und den Abzweigstücken (13) angeordnete Adapterkomponenten (15 - 17),
- mindestens eine Wandstruktur (32), in der sich Durchführungsöffnungen (18) mit Schutzummantelungen (19.1, 19.2) für die Hauptleitungen (12) und die Leitungslinien (14) befinden, in die Durchführungsdichtungen (20) aus einem elastischen Material für die Durchführungsöffnungen (18) eingepasst werden, die so angeordnet sind, dass das Ende (31) der Schutzummantelungen (19.1, 19.2) umschlossen wird, und die Durchführungsdichtung (29)
- ein konisches Teil (28) umfasst, das angeordnet ist, um die Durchführung der Hauptleitung (12) oder der Leitungslinie (14) durch die, Durchführungsdichtung (20) abzudichten,
- ein Hülsenteil (21) umfasst, wodurch die Durchführungsdichtung (20) so angeordnet ist, dass sie an der Wandstruktur (32) anliegt,
**dadurch gekennzeichnet, dass**
- wenn die Hauptleitung (12) oder die Leitungslinie (14) in die Durchführungsdichtung (20) eingesetzt wird, eine im konischen Teil (28) gebildete Dichtungslänge (S) gebildet wird,
- das Hülsenteil (21) der Durchführungsdichtung (20) Dichtungen (42.1, 42.2) in einer Entfernung zueinander umfasst, um die Durchführungsdichtung (20) zur Wandstruktur (32) hin abzudichten,
- die Durchführungsdichtung (20) mit zwei oder mehr unterschiedlichen Durchmessern den Schutzummantelungen (19.1, 19.2) angepasst ist.

2. Anschlusseinheit gemäß Patentanspruch 1, **dadurch gekennzeichnet, dass** die Materialdicke (d1) des konischen Teils (28) 15 - 35%, besonders 15 - 30% und ganz besonders 15 - 25% der Materialdicke des Hülsenteils (21) beträgt.

3. Anschlusseinheit gemäß Patentanspruch 1 oder 2, **dadurch gekennzeichnet, dass** die Neigung des konischen Teils (28) 5 - 20°, besonders 5 - 15° ganz besonders 5 - 10° beträgt.

4. Anschlusseinheit gemäß einem der Patentansprüche 1 - 3, **dadurch gekennzeichnet, dass** die Dichtungen (42.1, 42.2) zwei Dichtungslippen (43, 44), jeweils auf ihrer eigenen Seite, umfassen, von denen
- die erste, äußerste Dichtungslippe (43) so angeordnet ist, dass sie Absätze (23.1, 23.2) formt, die sich in das Hülsenteil (21) einpassen, und von denen zumindest ein Absatz (23.1, 23.2) so angeordnet ist, dass er, wenn die Durchführungsdichtung (20) eingesetzt ist, an der Wandstruktur (32) anliegt.
- die zweite Dichtungslippe (44) im Hülsenteil (21) in einer Aussparung (33), angeordnet zwischen den Absätzen (23.1, 23.2) für die Wandstruktur (32), angeordnet ist.

5. Anschlusseinheit gemäß einem der Patentansprüche 1 - 4, **dadurch gekennzeichnet, dass** das Hülsenteil (21) eine Nut (38) zwischen den Absätzen (23.1, 23.2) und der zweiten Dichtungslippe (44) aufweist.

6. Anschlusseinheit gemäß einem der Patentansprüche 1 - 5, **dadurch gekennzeichnet, dass** die Durchführungsdichtung (20) für die Schutzummantelungen (19.1, 19.2) auf zwei oder mehr unterschiedlichen Durchmessern angepasst ist.

7. Anschlusseinheit gemäß Patentanspruch 6, **dadurch gekennzeichnet, dass** die Durchführungsdichtung (20) in zwei axial hintereinander angeordneten inneren Räumen (24.1, 24.2) für die Schutzummantelungen (19.1, 19.2) unterschiedlichen Durchmessers aufgeteilt ist.

8. Anschlusseinheit gemäß Patentanspruch 6 oder 7, **dadurch gekennzeichnet, dass** die inneren Räume (24.1, 24.2) für die Schutzummantelungen (19.1, 19.2) von unterschiedlichen Durchmessern im Hülsenteil (21) angeordnet sind, von denen zumindest ein Teil (26) so angeordnet ist, dass er sich durch eine in der Wandstruktur (32) angeordneten Durchführungsöffnung (18) erstreckt.

9. Anschlusseinheit gemäß Patentanspruch 8, **dadurch gekennzeichnet, dass**
- dieser Teil (26) von dem Hülsenteil (21), der sich durch die besagte Durchführungsöffnung (18) erstreckt, so angeordnet ist, dass er hauptsächlich dem inneren Raum (24.2.), angeordnet für die Schutzummantelung (19.2) mit einem kleineren Durchmesser, entspricht,
- der in der Durchführungsdichtung (20) angeordnete innere Raum (24.2) für die Schutzummantelung (19.2) mit einem geringeren Durchmesser so dimensioniert ist, dass wenn die Schutzummantelung (19.2) in die Durchführungsdichtung (20) gedrückt wird, in dieser Anordnung der Absatz (23.1) der Durchführungsdichtung (20) gegen den Rand (27) der Durchführungsöffnung (18) gedrückt wird, um eine zusätzliche Dichtung zu schaffen.

10. Anschlusseinheit gemäß einem der Patentansprüche 1 - 9, **dadurch gekennzeichnet, dass** die Wandstruktur (32) eine Brandschutzmasse (36) enthält, die in Verbindung mit mindestens einigen der Durchführungsöffnungen (18) angeordnet ist.

11. Anschlusseinheit gemäß Patentanspruch 10, **dadurch gekennzeichnet, dass** die Wandstruktur (32) eine Gehäusekonstruktion (39) umfasst, die in Verbindung mit mindestens einigen der Durchführungsöffnungen (18) angeordnet ist, und in dieser Gehäusekonstruktion (39) die Brandschutzmasse (36) angeordnet ist.

## Revendications

1. Unité de raccordement pour un système de chauffage et/ou d'eau domestique, qui comprend une structure en forme de caisson (11), dans laquelle sont disposés
- des emplacements standardisés (25) pour les tuyaux principaux (12),
- des pièces d'embranchement (13) pour les canalisations (14) devant être conduites jusqu'aux points d'utilisation,
- des composants adaptateurs (15 à 17) disposés entre les tuyaux principaux (12) et les pièces d'embranchement (13),
- au moins une structure murale (32), dans laquelle il y a des ouvertures de passage (18) pour les tuyaux principaux (12) et les canalisations (14) équipés de gaines (19.1, 19.2), dans lesquelles ouvertures de passage (18) sont installés des joints de passage (20) d'un matériau élastique, lesquels sont agencés pour enfermer l'extrémité (31) de la gaine (19.1, 19.2), et lequel joint de passage (20) comprend
- une partie cône (28) agencée pour assurer l'étanchéité du passage du tuyau principal (12) ou de la canalisation (14) à travers le joint de passage (20),
- une partie manchon (21), par laquelle le joint de passage (20) est agencé pour s'attacher à la structure murale (32),
**caractérisée en ce que**
- lorsque le tuyau principal (12) ou la canalisation (14) est installé dans le joint de passage (20), une longueur d'étanchéité (S) est agencée pour être formée dans la partie cône (28),
- la partie manchon (21) du joint de passage (20) comprend des joints (42.1, 42.2) à une distance l'un de l'autre pour assurer l'étanchéité du joint de passage (20) à la structure murale (32),
- le joint de passage (20) est adapté pour une gaine (19.1, 19.2) de deux ou plusieurs diamètres différents.

2. Unité de raccordement selon la revendication 1, **caractérisée en ce que** l'épaisseur du matériau (d1) de la partie cône (28) est de 15 à 35 %, plus particulièrement de 15 à 30 % et encore plus particulièrement de 15 à 25 % de l'épaisseur du matériau (d2) de la partie manchon (21).

3. Unité de raccordement selon la revendication 1 ou 2, **caractérisée en ce que** l'inclinaison de la partie cône (28) est de 5 à 20°, plus particulièrement 5 à 15° et encore plus particulièrement de 5 à 10°.

4. Unité de raccordement selon l'une quelconque des revendications 1 à 3, **caractérisée en ce que** les joints (42.1, 42.2) comprennent deux lèvres d'étanchéité (43, 44) chacune de son côté, desquelles
- la première lèvre externe (43) est agencée pour former des épaules (23.1, 23.2) installées dans la partie manchon (21), desquelles au moins une épaule (23.1, 23.2) est agencée, quand le joint de passage (20) est installé, pour s'installer contre la structure murale (32),
- la seconde lèvre d'étanchéité (44) est agencée dans la partie manchon (21) dans un renfoncement (33) agencé entre les épaules (23.1, 23.2) pour la structure murale (32) .

5. Unité de raccordement selon l'une quelconque des revendications 1 à 4, **caractérisée en ce que** la partie manchon (21) comprend une rainure (38) entre les épaules (23.1, 23.2) et la seconde lèvre d'étanchéité (44).

6. Unité de raccordement selon l'une quelconque des revendications 1 à 5, **caractérisée en ce que** le joint de passage (20) est adapté pour une gaine (19.1, 19.2) de deux ou plusieurs diamètres différents.

7. Unité de raccordement selon la revendication 6, **caractérisée en ce que** le joint de passage (20) est divisé en deux espaces internes axialement consécutifs (24.1, 24.2) pour des gaines (19.1, 19.2) de diamètres différents.

8. Unité de raccordement selon la revendication 6 ou 7, **caractérisée en ce que** les espaces internes (24.1, 24.2) pour les gaines (19.1, 19.2) de diamètres différents sont disposés dans la partie manchon (21), de laquelle au moins une partie (26) est agencée pour s'étendre à travers une ouverture de passage (18) disposée dans la structure murale (32).

9. Unité de raccordement selon la revendication 8, **caractérisée en ce que**
- la partie (26) de la partie manchon (21) qui s'étend à travers ladite ouverture de passage (18) est agencée pour correspondre principalement à l'espace interne (24.2) disposé pour une gaine (19.2) ayant un diamètre plus petit,
- l'espace interne (24.2) disposé dans le joint de passage (20) pour une gaine (19.2) ayant un diamètre plus petit est dimensionné de sorte que, lorsque la gaine (19.2) est poussée dans le joint de passage (20), il serre l'épaule (23.1) du joint de passage (20) contre le bord (27) de l'ouverture de passage (18) pour former un joint supplémentaire.

10. Unité de raccordement selon l'une quelconque des revendications 1 à 9, **caractérisée en ce que** la structure murale (32) comprend un mastic coupe-feu (36), en liaison avec lequel au moins une partie des ouvertures de passage (18) sont disposées.

11. Unité de raccordement selon la revendication 10, **caractérisée en ce que** la structure murale (32) comprend une structure en forme de caisson (39), en liaison avec laquelle au moins une partie des ouvertures de passage (18) sont disposées et à l'intérieur de laquelle structure en forme de caisson (39) le mastic coupe-feu (36) est disposé.
